# FASCICULE DE BREVET EUROPEEN

(11) **EP 0 968 848 B1**
(45) Date de publication et mention de la délivrance du brevet: **10.09.2003**
(21) Numéro de dépôt: 99111650.0
(22) Date de dépôt: 16.06.1999
(51) Int. Cl.: B60C 11/12, B60C 11/13

(54) **Bande de roulement de pneumatique comportant des incisions delimitant des plots de gomme**
Reifenlauffläche mit Einschnitten ,welche Gummiblöcke begrenzen
Tread with sipes delimiting rubber blocks

(30) Priorité: 03.07.1998 FR 9808652
(43) Date de publication de la demande: 05.01.2000
(73) Titulaire: Michelin Recherche et Technique S.A., 1763 Granges-Paccot (CH); Sociéte de Technologie Michelin, 63000 Clermont-Ferrand Cedex 09 (FR)
(72) Inventeur: Merino Lopez, José, 63200 Riom (FR); Garnier de Labareyre, Bertrand, 63400 Chamalieres (FR); Auxerre, Pascal, 63130 Royat (FR)
(74) Mandataire: Diernaz, Christian

(56) Documents cités:
- EP-A- 0 664 230
- EP-A- 1 007 378
- FR-A- 2 759 323
- GB-A- 502 992
- US-A- 2 690 202
- US-A- 2 938 560
- DATABASE WPI Section Ch, Week 9033 Derwent Publications Ltd., London, GB; Class A95, AN 86-055660 XP002096304 & JP 61 016112 A (SUMITOMO RUBBER IND LTD) , 24 janvier 1986 (1986-01-24)

## Description

L'invention concerne les bandes de roulement pour pneumatique et en particulier une sculpture comportant une nouvelle géométrie d'incision conférant auxdites bandes des performances améliorées en adhérence tout en repoussant dans le temps l'apparition d'usures irrégulières.

L'invention concerne les bandes de roulement destinées à la fabrication de pneumatiques neufs ou au rechapage de pneumatiques, et en particulier les sculptures pour lesdites bandes comportant un grand nombre de découpures se présentant sous la forme de rainures et/ou d'incisions. Par incision, on entend, dans la présente description, une découpure de largeur inférieure ou égale à 2 mm, tandis qu'une rainure est une découpure de largeur supérieure à 2 mm.

Il est connu, par exemple dans le brevet **US 2,100,084,** de réaliser des incisions dont la trace sur la surface de roulement de la bande de roulement d'un pneumatique est de forme circulaire fermée permettant d'avoir des arêtes actives dans toutes les directions tangentes à la surface de roulement. Chacune de ces incisions délimite et isole un élément de gomme (de petites dimensions devant la largeur de ladite bande) uniquement relié à la bande par sa base. Cet élément de gomme a tendance, sous l'action des forces de contact avec le sol pendant le roulage, à se déformer à la fois en cisaillement et en flexion (efforts tangentiels à la surface de l'élément isolé venant en contact avec le sol) et en compression sous la charge portée par le pneumatique. Compte tenu de la taille de ces éléments isolés et des efforts auxquels ils sont soumis, il arrive que ces éléments puissent être arrachés à la bande de roulement pendant le roulage.

Pour remédier à cet inconvénient, il est connu, par exemple dans le brevet US 2,938,560, de prévoir sur les parois de l'élément isolé des éléments de liaison en gomme reliant ledit élément au reste de la bande de roulement. Dans ce brevet US 2,938,560, il est décrit une bande de roulement, correspondant au préambule de la première revendication, pourvue d'une sculpture formée d'une pluralité d'incisions de forme ondulée lesdites incisions étant disposées de manière à isoler des plots de gomme; ces plots de gomme sont reliés à la bande de roulement par quatre supports disposés sous la surface de roulement, chaque support prenant naissance sous la surface de roulement à l'état neuf et s'étendant dans une direction perpendiculaire à ladite surface jusqu'à pleine profondeur desdites incisions.

Toutefois, de telles incisions peuvent conduire à des usures irrégulières, c'est-à-dire des usures apparaissant préférentiellement sur certains sites de la bande de roulement et s'amplifiant avec le roulage pour conduire le plus souvent à un retrait prématuré pneumatique; les arêtes formées par les incisions sur la bande de roulement peuvent être, dans certains cas, des sites
préférentiels d'initiation d'un tel type d'usure, en particulier dans une application aux pneumatiques ayant une grande épaisseur de bande de roulement (par exemple en pneumatique pour poids lourd).

En outre, les incisions proposées dans le brevet **US 2,938,560** présentent un autre inconvénient lié à la pénétration de cailloux dans la bande de roulement. C'est également le cas des incisions décrites dans la demande EP 1007378. Ce document appartient à l'état de la technique selon l'Art. 54(3) CBE.

Il arrive fréquemment que le sol sur lequel roule le pneumatique soit recouvert de cailloux ou autres objets qui peuvent s'introduire dans les incisions. Dans un grand nombre de cas, ces objets introduits sont éjectés sous l'effet de la force centrifuge résultant de la rotation du pneumatique; malgré tout, il arrive que certains desdits corps étrangers restent emprisonnés à l'intérieur desdites incisions et éventuellement progressent vers le fond des incisions jusqu'à venir agresser la structure du pneumatique. Il est également possible que ces objets inclus découpent les plots de gomme délimités par chaque incision de tracé fermé ce qui se traduit par des arrachements de gomme et la formation de trous dans la bande de roulement, accroissant d'autant la possibilité de pénétration de corps étrangers.

Pour éviter à la fois l'apparition d'une usure anormale au voisinage des arêtes formées par des incisions de trace moyenne fermée ou quasi fermée sur la surface de roulement d'une bande de roulement tout en réduisant la possibilité d'une introduction d'éléments étrangers dans l'incision, l'invention propose une bande de roulement pour pneumatique, ladite bande étant pourvue d'une surface de roulement et d'une pluralité d'incisions débouchant sur ladite surface. Une usure est dite anormale quand elle apparaît de manière locale sur certains endroits de la sculpture d'un bande de roulement et non de manière uniforme sur l'ensemble de ladite sculpture.

Chaque incision est définie par l'espace délimité principalement entre deux parois principales en regard l'une de l'autre, lesdites parois étant perpendiculaires à ou obliques par rapport à la surface de roulement.

La bande de roulement est pourvue d'au moins un plot de gomme, d'orientation principale XX' perpendiculaire ou inclinée par rapport à la surface de roulement, délimité par au moins une incision, ledit plot comportant une paroi d'extrémité et une paroi latérale perpendiculaire ou inclinée par rapport à la surface de roulement. La paroi d'extrémité, correspondant à la paroi du plot située le plus près de la surface de roulement, est destinée à venir en contact avec le sol quand la bande équipe un pneumatique roulant sur ledit sol.

Le plot ainsi délimité est relié à la bande de roulement par sa base (partie du plot de
gomme située le plus à l'intérieur de ladite bande) et par au moins un élément de liaison en gomme reliant la paroi latérale dudit plot au reste de la bande. La bande de roulement selon l'invention est caractérisée en ce que :
- chaque élément de liaison de chaque plot de gomme présente, avec la paroi latérale dudit plot de gomme, une surface d'intersection délimitée par deux lignes géométriques principales de tracé semblable,
- la longueur projetée, sur la surface de roulement de la bande à l'état neuf et suivant la direction **XX'**, des lignes géométriques principales des surfaces d'intersection de tous les éléments de liaison de chaque plot de gomme représente au moins **90**% du périmètre du contour de chaque plot de gomme mesuré sur la même surface,
- la somme des longueurs des intersections avec toute surface, sensiblement parallèle à la surface de roulement de la bande à l'état neuf et située à l'intérieur de ladite bande, des surfaces d'intersection de tous les éléments de liaison d'un même plot de gomme représente au plus **50**% du périmètre du contour dudit plot de gomme mesuré sur la même surface sensiblement parallèle à la surface de roulement de la bande à l'état neuf et située à l'intérieur de la bande.

Par direction moyenne **XX'** d'un plot de gomme délimité par une incision, on entend la direction reliant le barycentre géométrique de la base dudit plot au barycentre de la paroi d'extrémité (cette direction fait un angle de **90°** avec ladite surface quand l'incision délimitant cet élément est perpendiculaire à cette surface).

Un élément de liaison est défini comme une partie de gomme qui fait saillie sur la paroi latérale d'un plot de gomme isolé, ladite paroi latérale formant l'une des parois principales d'une incision; cet élément de liaison est en outre relié à l'autre paroi principale de l'incision délimitant ledit plot de gomme. Chaque élément de liaison présente, avec la paroi latérale du plot, une surface d'intersection définie géométriquement par un contour présentant deux lignes géométriques principales ayant des tracés assez proches.

Par tracé semblable, on entend que les lignes géométriques principales délimitant une surface d'intersection d'un élément de liaison ont des formes géométriques quasiment superposables sur une grande partie de leur étendue.

Préférentiellement, lesdits tracés sont sensiblement parallèles, c'est-à-dire que les distances moyennes séparant lesdites lignes sont quasiment constantes. La distance entre deux lignes géométriques d'une même surface d'intersection d'un élément de liaison d'un plot est mesurée sur la surface latérale dudit plot comme la longueur de la courbe obtenue par l'intersection de ladite surface d'intersection avec une surface virtuelle parallèle à la surface de roulement de la bande de roulement à l'état neuf.

La longueur projetée correspond à la longueur mesurée sur le contour du plot de gomme correspondant aux projections des lignes géométriques principales de l'ensemble des surfaces d'intersection des éléments de liaison sur ledit plot; si deux lignes géométriques principales ont la même projection alors la longueur projetée est égale à la longueur de cette projection. Par convention, la longueur projetée est au maximum égale au périmètre du contour du plot et dans ce dernier cas, à tout point du contour du plot correspond au moins un point d'au moins une ligne géométrique principale.

Une sculpture de bande de roulement, comportant des incisions délimitant des plots de gomme selon l'invention, présente l'avantage d'avoir une grande longueur d'arêtes de gomme actives dans le contact avec le sol (et cela pour différents niveaux d'usure de ladite bande) par la présence d'un plus grand nombre d'incisions et de plots de gomme tout en obtenant une protection satisfaisante vis-à-vis de la pénétration de corps étrangers grâce à la présence des éléments de liaison en gomme empêchant lesdits corps de pénétrer et de rester dans l'incision dès lors que le/les élément(s) de liaison d'un même plot couvre(nt) une plus ou moins grande partie du contour dudit plot.

De préférence, un effet optimal est atteint quand la longueur projetée, sur la surface de roulement de la bande à l'état neuf et suivant la direction **XX'**, des lignes géométriques principales des surfaces d'intersection de tous les éléments de liaison d'une pluralité de plots de gomme représente 100% du périmètre du contour dudit plot de gomme mesuré sur la même surface

En outre, ces éléments de liaison, en gomme élastique, exercent une action mécanique de rejet sur tout corps étranger qui s'introduit malgré tout dans l'incision.

La sculpture selon l'invention permet d'éviter l'apparition d'usure irrégulière prenant naissance sur certaines arêtes de gomme car la géométrie du ou des éléments de liaison d'un même plot conduit à ce que la position des intersections desdits éléments de liaison avec la surface de roulement change régulièrement avec l'usure de ladite bande. Lorsque une bande selon l'invention équipe un pneumatique, il en résulte, avec l'usure de celle-ci, une variation régulière de la répartition des efforts tangentiels exercés par le sol sur le pneumatique dans le contact entre le pneumatique et le sol.

On peut par ailleurs prévoir que d'un plot à un autre de ses voisins sur une même bande, les emplacements des éléments de liaison soient différents de manière à avoir, quelque soit l'usure de la bande, une même proportion d'arêtes actives dans une direction donnée (circonférentielle ou transversale).

De manière préférentielle, et pour maintenir une grande longueur d'arête quel que soit le niveau d'usure d'une bande, les éléments de liaison présentent des surfaces d'intersection sur les parois latérales caractérisées en ce que la largeur de chacune desdites surfaces d'intersection ne varie pas, en moyenne, de plus de 50% de la largeur moyenne de l'élément de liaison considéré sur l'ensemble de l'étendue dudit élément; ladite largeur étant égale à la longueur de la courbe résultant de l'intersection de ladite surface d'intersection dudit élément de liaison avec une surface parallèle à la surface de roulement de la bande de roulement à l'état neuf.

En outre, et pour obtenir une liaison de chaque plot avec la bande pendant une grande partie de la durée de vie de ladite bande, il est préférable que les éléments de liaison s'étendent dans le sens de la profondeur et en partant de la surface de roulement au moins jusqu'à 50% de la profondeur de l'incision délimitant ledit plot de façon à avoir les effets de l'invention pendant la plus grande partie de l'utilisation de cette bande.

Ainsi les éléments de liaison restent-ils suffisamment efficaces pour empêcher la pénétration d'objets dans l'incision et rigidifier le plot de gomme, tout en conservant une grande longueur d'arête active quel que soit le niveau d'usure de la bande.

Pour permettre une meilleure compréhension de l'invention et de ses avantages, il est maintenant décrit plusieurs variantes de réalisation de l'invention au moyen des figures suivantes :
La figure **1** montre partiellement une bande de roulement d'un pneumatique pourvue d'une pluralité d'incisions délimitant des plots de gomme reliés à ladite bande par au moins un élément de liaison;
la figure **2** représente la bande de roulement de la figure **1** selon une coupe **A-A** réalisée transversalement à l'un des plots de gomme pourvu d'un élément de liaison;
la figure **3** montre une vue à plat de la totalité de la paroi latérale du plot de gomme de la bande de roulement montrée à la figure **2**, ledit plot étant relié à la bande de roulement par un élément de liaison s'enroulant en hélice autour dudit plot;
la figure **4** montre, sur une vue semblable à celle de la figure **3**, une variante de géométrie d'un plot de gomme de forme cylindrique comportant trois éléments de liaison;
la figure **5** montre les traces sur une surface de roulement d'une bande de roulement de deux incisions délimitant chacune un plot de gomme, l'un des plots étant formé à l'intérieur de l'autre plot.

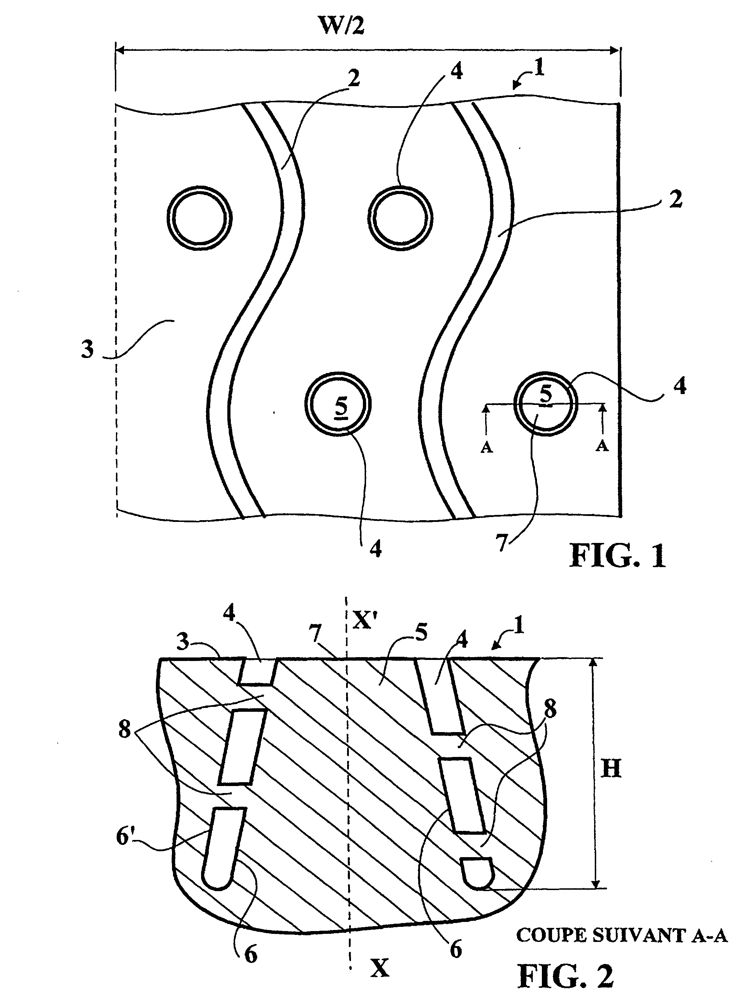

La figure **1** montre en partie la moitié d'une bande de roulement **1** pour pneumatique, ladite bande **1** ayant une largeur **W** et une épaisseur **E** mesurée à l'état neuf comme la distance séparant la surface de roulement **3** destinée à venir en contact avec le sol et une surface intérieure destinée à être appliquée sur la surface radialement à l'extérieur d'une ébauche de pneumatique.

La bande **1** selon l'invention est pourvue de rainures **2** orientées dans le sens circonférentiel et d'une pluralité d'incisions **4**. Lesdites incisions **4**, de profondeur inférieure ou égale à l'épaisseur **E** de la bande, sont quasiment fermées sur elles-mêmes pour délimiter et isoler des plots de gomme **5** du reste de la bande de roulement. Dans le cas présenté, les traces, sur la surface de roulement du pneumatique neuf, des incisions **4** délimitant des plots de gomme **5** ont une forme circulaire (mais bien entendu, ce qui va être décrit peut s'appliquer à des formes différentes : ovale, rectangulaire, ...).

Une coupe transversale d'un plot de gomme **5** selon **A-A** est représentée à la figure **2**. On y distingue l'incision **4** débouchant sur la surface de roulement **3** à l'état neuf, ladite incision étant formée par l'espace situé entre deux parois de gomme **6** et **6'** et s'étend dans la bande sur une profondeur **H**, l'une desdites parois constituant la paroi latérale **6** du plot de gomme **5** ayant la forme d'un cône tronqué. Le plot de gomme **5** possède un axe de symétrie **XX'** qui est dans le cas présent perpendiculaire à la surface de roulement **3** (bien sûr, il peut être envisagé d'incliner l'axe **XX'** d'un angle différent de zéro avec la perpendiculaire à la surface de roulement **3**).

En outre, la paroi latérale **6** du plot de gomme **5** est reliée à la paroi opposée **6'** sur la bande de roulement par un élément de liaison **8** unique prenant naissance sous la surface de roulement **3** du pneumatique neuf et s'enroulant à la manière d'une hélice autour de l'axe **XX'**. Cet élément de liaison **8** n'atteint pas le fond de l'incision **4** de profondeur **H** de manière à ne pas diviser l'incision **4** en deux parties.

La paroi d'extrémité **7** du plot de gomme **5** se trouve dans l'exemple décrit, au même niveau que la surface de roulement **3** à l'état neuf, mais il peut être intéressant de prévoir que cette paroi soit décalée radialement soit vers l'extérieur soit vers l'intérieur de ladite surface de roulement **3**. Préférentiellement, la surface de paroi d'extrémité **7** est située légèrement sous la surface de roulement **3** à l'état initial; l'usure progressive de la bande entretient ce léger décalage pendant toute la durée de vie de la bande de roulement.

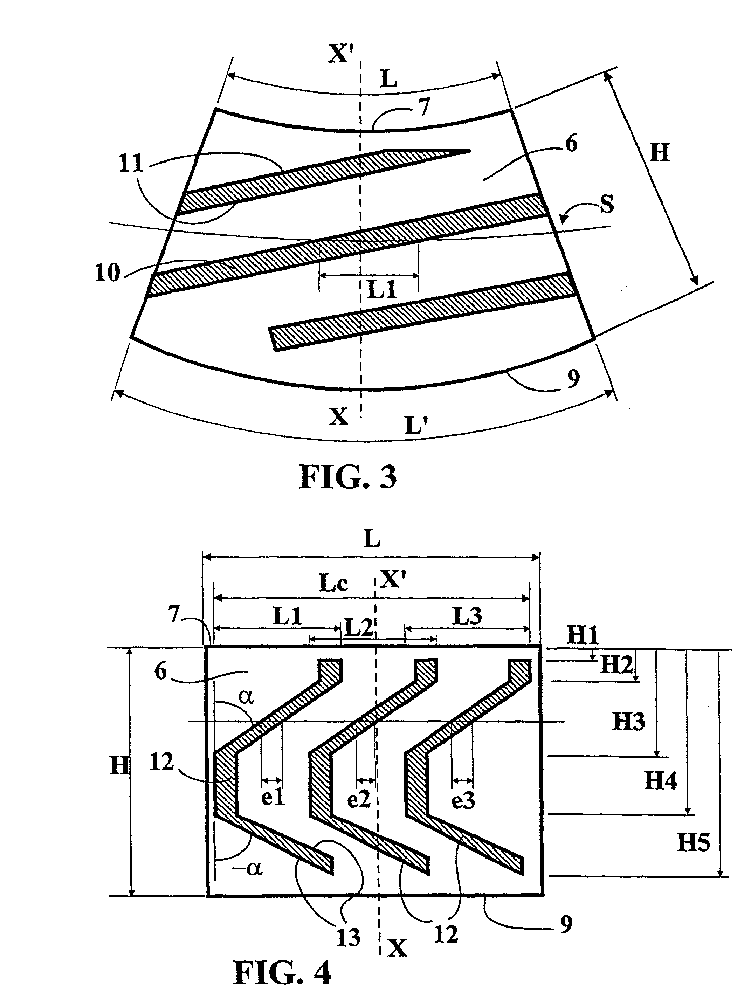

La figure **3** représente une vue à plat schématique de la surface de paroi latérale **6** du plot de gomme **5** montré à la figure **2**. La largeur **L** correspond au périmètre du contour de la paroi d'extrémité **7** du plot, tandis que la largeur L' correspond au périmètre du contour du plot dans sa partie formant la base **9** dudit plot. Sur cette figure, on distingue la surface d'intersection **10** de l'unique élément de liaison **8** avec la surface de paroi latérale **6;** cette surface **10** est limitée par deux lignes principales géométriques **11** rectilignes parallèles entre elles sur cette figure **3**. Cette surface **10** prend naissance sous la surface de roulement et s'étend jusqu'au voisinage de la base **9** du plot **5** sans cependant atteindre ladite base. Lorsque l'on coupe le plot par une surface virtuelle (dont la trace est visualisée sur la figure **3** par une ligne courbe repérée **S**) parallèle à la surface de roulement initiale, la longueur **L1** de l'intersection de la surface d'intersection **10** avec ladite surface virtuelle est très inférieure au périmètre dudit plot mesurée sur cette surface virtuelle de coupe.

La projection des lignes principales **11** sur la surface de roulement couvre en totalité le contour de la paroi d'extrémité du plot.

Ainsi, la longueur d'arête formée par l'incision débouchant sur la surface de roulement est optimisée quelque soit le niveau d'usure, tandis que l'élément de liaison empêche tout introduction de corps étranger dans l'incision **4** délimitant le plot **5**.

Il a été décrit précédemment un plot ayant la forme d'un cône tronqué dont la base de plus petit diamètre se trouve sur la surface de roulement du pneumatique neuf, mais il est également possible de réaliser le contraire ou encore d'adopter une forme cylindrique quelconque, l'axe **XX'** représentant l'axe autour duquel est construite ladite forme.

Dans la variante présentée maintenant avec le support de la figure **4**, et pour faciliter la représentation et la compréhension, le plot de gomme a la forme d'un cylindre circulaire.

Sur la figure **4** est montrée une vue à plat d'une paroi latérale **6** d'un plot de gomme pourvu sur ladite surface de trois éléments de liaison dont les surfaces d'intersection **12** avec la paroi latérale **6** ont les formes décrites ci-après. Chaque surface d'intersection **12** est limitée par deux lignes géométriques **13** sensiblement parallèles entre elles. Sur cette figure **4,** les lignes **13** prennent naissance à partir d'une profondeur **H1** sous la surface de paroi **7** et se prolongent dans la direction **XX'** jusqu'à une profondeur **H2**; ensuite, elles se prolongent par une partie rectiligne faisant un angle a avec la direction **XX'** jusqu'à une profondeur **H3**; puis, elles se prolongent par une partie rectiligne de **H3** à **H4**, pour terminer par une partie rectiligne inclinée d'un angle (-α) avec la direction **XX'** jusqu'à une profondeur **H5** légèrement inférieure à la profondeur **H** de l'incision délimitant le plot considéré.

Dans la variante décrite et sur la vue représentée par la figure **4**, les projections, parallèlement à la direction **XX'** et sur la surface de roulement initiale, des lignes géométriques **13** limitant les surfaces d'intersection des trois éléments de liaison déterminent des segments de longueur **L1**, **L2**, **L3** se chevauchant partiellement. La longueur projetée desdites trois projections est égale à la longueur **Lc** mesurant, sur le contour de la paroi d'extrémité **7** la distance entre les points des projections les plus éloignés et représentant la longueur sur le contour du plot affectée par au moins la projection d'une ligne géométrique principale. Cette longueur projetée **Le** est supérieure à **90%** du périmètre **L** du contour de la paroi d'extrémité **7** du plot.

Cette variante optimise l'effet de protection du fond de l'incision puisque, pour différents niveaux d'usure de la bande, la longueur projetée reste quasiment inchangée (ainsi, le fond de l'incision délimitant le plot de gomme est protégé par la présence des éléments de liaison au moins jusqu'à mi-usure de ladite bande).

Une variante de bande de roulement selon l'invention consiste à former dans ladite bande au moins un plot de gomme, d'axe moyen **XX'**, délimité par au moins une incision, ledit plot comportant une paroi latérale faisant le tour dudit plot autour de **XX'** et limitée par une paroi d'extrémité du plot visible de l'extérieur de ladite bande, ledit plot entourant au moins un autre plot de gomme délimité par une incision débouchant sur ladite surface d'extrémité. Cette variante permet d'augmenter de façon sensible le nombre d'arêtes de gomme.

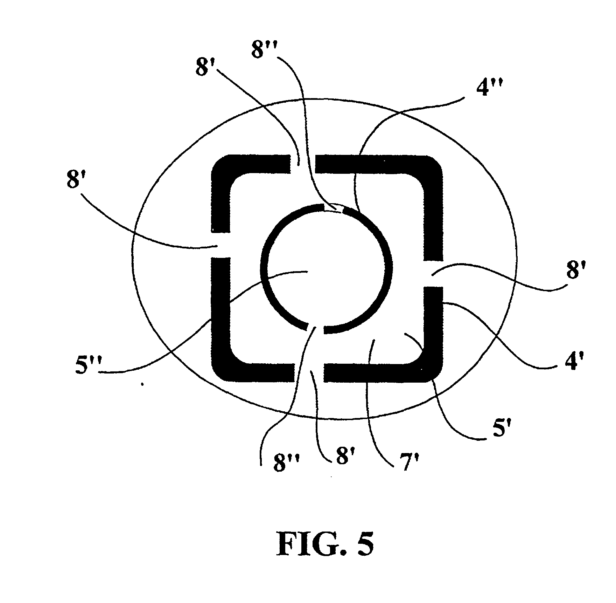

Un exemple correspondant à cette variante est montré à la figure **5** suivant laquelle est visible une partie de la surface de roulement **3** à l'état neuf (vue de l'extérieur). Un premier plot de gomme **5'** dont le contour de la paroi d'extrémité **7'** est de forme carrée est délimité par une incision **4'**. À l'intérieur de ce premier plot **5'**, il est prévu une deuxième incision **4"** dont la trace visible sur cette figure est de forme circulaire pour délimiter un deuxième plot de gomme **5"**. En outre, le premier plot **5'** est relié au reste de la bande de roulement par quatre éléments de liaison prenant naissance sur la surface de roulement **3** et dont les traces **8'** sont visibles sur cette figure. Lesdits quatre éléments de liaison sont disposés de manière à s'enrouler autour du plot **5'** tous dans un même sens (positif par convention). Le deuxième plot **5"** formé à l'intérieur du premier est relié audit premier plot **5'** par deux éléments de liaison débouchant également sur la surface de roulement (traces **8"**); lesdits deux éléments s'enroulant préférentiellement autour du deuxième plot **5"** selon un sens opposé au sens positif défini pour les éléments de liaison du premier plot et cela dans le but de limiter la torsion de chaque plot sous l'effet de l'écrasement dans le contact avec le sol.

Ce qui vient d'être décrit avec un premier plot à l'intérieur duquel est formé un deuxième plot peut aisément être généralisé au cas d'un plot de gomme incluant une pluralité de plots de gomme de géométrie quelconque.

D'autres variantes peuvent être envisagées aisément dans lesquelles des éléments de liaison peuvent ou non déboucher sur la surface de roulement du pneumatique neuf, c'est-à-dire affleurer ladite surface.

Dans la présente description, une bande de roulement selon l'invention peut être employée comme partie de structure d'un pneumatique ou bien d'une chenille.

Les différentes variantes de bande de roulement selon l'invention décrites peuvent être réalisées, par exemple, en procédant de la manière suivante :
- former un intercalaire en carton (ou tout autre matériau approprié) destiné à être incorporé dans la bande de gomme crue avant moulage et vulcanisation pour former une incision de contour fermé et délimitant un plot de gomme;
- former des orifices dans l'intercalaire, lesdits orifices étant destinés à laisser passer la gomme pour former les éléments de liaison;
- après moulage et vulcanisation de la bande, l'intercalaire peut être maintenu en place, le contact avec la route provoquant son élimination progressive; il est également possible de l'enlever.

## Revendications

1. Bande de roulement (**1**) pour pneumatique, ladite bande (**1**) étant pourvue d'une surface de roulement (**3, 3'**)et d'une pluralité d'incisions (**4, 4', 4"**) débouchant sur ladite surface, chaque incision (**4, 4', 4**) étant définie par l'espace délimité principalement entre deux parois (**6, 6'**) principales en regard l'une de l'autre, lesdites parois étant perpendiculaires à ou obliques par rapport à la surface de roulement (**3, 3'**), la bande de roulement comportant au moins un plot de gomme (**5, 5', 5"**), d'axe moyen **XX',** délimité par au moins une incision, ledit plot comportant une paroi latérale (**6**) faisant le tour dudit plot autour de **XX'** et limitée par une paroi d'extrémité (**7**) du plot visible de l'extérieur de ladite bande, ladite paroi latérale (**6**) étant isolée de la bande de roulement à l'exception d'au moins un élément de liaison en gomme (**8, 8', 8"**), chaque élément de liaison de chaque plot de gomme présente, avec la paroi latérale dudit plot de gomme, une surface d'intersection (**10, 12**) délimitée par deux lignes géométriques principales (**11, 13**), la bande de roulement étant **caractérisée en ce que** :
• la longueur projetée, sur la surface de roulement de la bande à l'état neuf et suivant la direction **XX',** des lignes géométriques principales (**11, 13**) des surfaces d'intersection de tous les éléments de liaison d'un même plot de gomme (**5, 5', 5"**), est supérieure à 90% du périmètre (**L**) du contour de chaque plot de gomme mesuré sur la même surface,
• la somme des longueurs des intersections (**L1, L2, L3**), avec toute surface sensiblement parallèle à la surface de roulement de la bande à l'état neuf et située à l'intérieur de ladite bande, des surfaces d'intersection de tous les éléments de liaison d'un même plot de gomme, représente au plus **50**% du périmètre du contour dudit plot de gomme mesuré sur la même surface.

2. Bande de roulement (**1**) selon la revendication 1 **caractérisée en ce que** la longueur projetée, sur la surface de roulement de la bande à l'état neuf et suivant la direction **XX',** des lignes géométriques principales (**11, 13**) des surfaces d'intersection de tous les éléments de liaison d'un même plot de gomme (**5, 5', 5"**), est égale au périmètre (**L**) du contour de chaque plot de gomme mesuré sur la même surface.

3. Bande de roulement (**1**) selon la revendication 1 ou la revendication 2 **caractérisée en ce qu'**un au moins des plots de gomme (**5, 5', 5"**) comportant au moins un élément de liaison (**8**) est de forme générale cylindrique d'axe moyen **XX'**.

4. Bande de roulement (**1**) selon la revendication **3 caractérisé en ce que** les variations de largeur de la surface d'intersection (**10,12**) de chaque élément de liaison (**8**) d'un plot de gomme ne varie pas de plus de **50%** de la largeur moyenne dudit élément de liaison sur l'ensemble de l'étendue dudit élément, ladite largeur étant égale à la longueur de la courbe obtenu par l'intersection de ladite surface d'intersection avec une surface parallèle à la surface de roulement de la bande de roulement à l'état neuf.

5. Bande de roulement (**1**) selon la revendication **4 caractérisé en ce qu'**au moins un plot de gomme (**5, 5', 5"**) est pourvu d'au moins un élément de liaison (**8**) dont la surface d'intersection (**10,12**) avec la paroi latérale dudit plot est délimitée par deux lignes géométriques principales (**11,13**), chacune desdites lignes géométriques présentant au moins en partie un angle α sensiblement constant et différent de 0° avec la direction **XX'**.

6. Bande de roulement (**1**) selon la revendication 5 **caractérisée en ce qu'**au moins un plot de gomme (**5,5',5"**) est pourvu d'au moins deux éléments de liaison (**8**) dont les surfaces d'intersection avec la paroi latérale dudit plot sont délimitées par des lignes géométriques principales (**13**) parallèles ou quasiment parallèles entre elles.

7. Bande de roulement (**1**) selon l'une des revendications **1** à **6 caractérisée en ce que** la longueur projetée, sur la surface de roulement de la bande à l'état neuf et suivant la direction **XX'**, des lignes géométriques principales (**11, 13**) des surfaces d'intersection de tous les éléments de liaison d'un même. plot de gomme (**5, 5', 5"**), est égale au périmètre (**L**) du contour dudit plot de gomme.

8. Bande de roulement pour pneumatique selon l'une des revendications 1 à 7 **caractérisée en ce que** au moins un plot (**5'**) entoure au moins un autre plot de gomme (**5"**) délimité par une incision (**4"**), ladite incision (**4"**) débouchant sur la paroi d'extrémité du plot (**5'**).

9. Bande de roulement selon la revendication **8 caractérisée en ce que** chaque plot de gomme (**5"**) entouré par un autre plot de gomme (**5'**) est pourvu sur sa surface latérale d'au moins un pont de liaison (**8"**) reliant lesdits plots (**5',5"**) entre eux, la surface d'intersection desdits plots avec la paroi latérale du plot entouré par un autre plot, étant délimitée par deux lignes géométriques principales sensiblement parallèles entre elles, les tangentes auxdites lignes faisant un angle sensiblement constant et différent de zéro avec l'axe **XX',** au moins sur une grande partie du plot de gomme (**5"**).

10. Bande de roulement selon la revendication **9 caractérisé en ce que** chaque élément de liaison (**8'**) d'un premier plot de gomme (**5'**) entourant un deuxième plot de gomme (**5"**) forme, au moins partiellement autour dudit premier plot, une hélice s'enroulant autour de l'axe **XX'** dans un premier sens, tandis que chaque élément de liaison (**8"**) reliant ledit deuxième plot (**5"**) situé à l'intérieur du premier plot forme, au moins partiellement autour dudit deuxième plot, une hélice s'enroulant dans un sens opposé audit premier sens.

11. Bande de roulement selon l'une des revendications **8** à **10 caractérisée en ce que** la longueur projetée, sur la surface de roulement de la bande à l'état neuf et suivant la direction **XX',** des lignes géométriques principales des surfaces d'intersection de tous les éléments de liaison (**8', 8"**) d'un même plot de gomme (**5', 5"**), est égale au périmètre (**L**) du contour dudit plot de gomme.

12. Pneumatique comportant une bande de roulement définie selon l'une quelconque des revendications **1** à **11.**

## Patentansprüche

1. Lauffläche (1) für einen Reifen, wobei die genannte Lauffläche (1) mit einer Abrolloberfläche (3, 3') und mit einer Vielzahl von Einschnitten (4, 4', 4") versehen ist, die auf der genannten Oberfläche einmünden, jeder Einschnitt (4, 4', 4") durch den Raum definiert ist, der hauptsächlich zwischen zwei einander gegenüberliegenden Hauptwänden (6, 6') abgegrenzt ist, die genannten Wände senkrecht oder schräg bezüglich der Abrolloberfläche (3, 3') stehen, die Lauffläche mindestens einen Gummiklotz (5, 5', 5") mit einer mittleren Achse XX' aufweist, der durch mindestens einen Einschnitt begrenzt ist, der genannte Klotz eine Seitenwand (6) aufweist, die XX' umläuft, und durch eine Endwand (7) des Klotzes begrenzt ist, die von der Außenseite der genannten Lauffläche her sichtbar ist, die genannte Seitenwand (6) von der Lauffläche isoliert ist, mit Ausnahme mindestens eines Verbindungselements (8, 8', 8") aus Gummi, jedes Verbindungselement eines jeden Gummiklotzes zusammen mit der Seitenwand des genannten Gummiklotzes eine Schnittfläche (10, 12) darbietet, die durch zwei geometrische Hauptlinien (11, 13) begrenzt ist, und die Lauffläche **dadurch gekennzeichnet ist, daß**:
• die auf die Abrolloberfläche der Lauffläche in neuem Zustand und in Richtung XX' projizierte Länge der geometrischen Hauptlinien (11, 13) der Schnittflächen aller Verbindungselemente ein und desselben Gummiklotzes (5, 5', 5") größer sind als 90% des Umfanges (L) der Kontur eines jeden Gummiklotzes, gemessen in der selben Oberfläche, und
• die Summe der Längen der Schnitte (L1, L2, L3) mit jeder Oberfläche, die im wesentlichen parallel zur Abrolloberfläche der Lauffläche in neuem Zustand ist und im Inneren der genannten Lauffläche sitzt, der Schnittflächen aller Verbindungselemente ein und desselben Gummiklotzes höchstens 50% des Umfanges der Kontur des genannten Gummiklotzes darstellt, gemessen auf der selben Oberfläche.

2. Lauffläche (1) nach Anspruch 1, **dadurch gekennzeichnet, daß** die projizierte Länge auf der Abrolloberfläche in neuem Zustand und in Richtung XX' der geometrischen Hauptlinien (11, 13) der Schnittflächen aller Verbindungselemente ein und desselben Gummiklotzes (5, 5', 5") gleich dem Umfang (L) der Kontur eines jeden Gummiklotzes ist, gemessen auf der selben Oberfläche.

3. Lauffläche (1) nach Anspruch 1 oder Anspruch 2, **dadurch gekennzeichnet, daß** mindestens einer der Gummiklötze (5, 5', 5"), der mindestens ein Verbindungselement (8) aufweist, insgesamt zylindrische Form mit der Mittelachse XX' aufweist.

4. Lauffläche (1) nach Anspruch 3, **dadurch gekennzeichnet, daß** die Änderungen der Breite der Schnittfläche (10, 12) eines jeden Verbindungselements (8) eines Gummiklotzes sich nicht mehr als um 50% der mittleren Breite des genannten Verbindungselements über die Gesamtheit der Erstreckung des genannten Elements ändert, wobei die genannte Breite gleich ist der Länge der Kurve, die durch den Schnitt der genannten Schnittfläche mit einer Oberfläche parallel zur Abrolloberfläche der Lauffläche in neuem Zustand erreicht wird.

5. Lauffläche (1) nach Anspruch 4, **dadurch gekennzeichnet, daß** mindestens ein Gummiklotz (5, 5', 5") mit mindestens einem Verbindungselement (8) versehen ist, dessen Schnittfläche (10, 12) mit der Seitenwand des genannten Klotzes begrenzt ist durch zwei geometrische Hauptlinien (11, 13), wobei jede der genannten geometrischen Linien mindestens teilweise einen Winkel α aufweist, der im wesentlichen konstant ist und sich von der Richtung XX' um 0° unterscheidet.

6. Lauffläche (1) nach Anspruch 5, **dadurch gekennzeichnet, daß** mindestens ein Gummiklotz (5, 5', 5") mit mindestens zwei Verbindungselementen (8) versehen ist, deren Schnittflächen mit der Seitenwand des genannten Klotzes durch zueinander parallele oder gewissermaßen parallele geometrische Hauptlinien (13) begrenzt sind.

7. Lauffläche (1) nach einem der Ansprüche 1 bis 6, **dadurch gekennzeichnet, daß** die auf die Abrolloberfläche der Lauffläche in neuem Zustand und in Richtung XX' projizierte Länge der geometrischen Hauptlinien (11, 13) der Schnittflächen aller Verbindungselemente ein und desselben Gummiklotzes (5, 5', 5") gleich ist dem Umfang (L) der Kontur des genannten Gummiklotzes.

8. Lauffläche nach einem der Ansprüche 1 bis 7, **dadurch gekennzeichnet, daß** mindestens ein Klotz (5') mindestens einen anderen Gummiklotz (5"), der durch einen Einschnitt (4") umgrenzt ist, umgibt, wobei der genannte Einschnitt (4") auf der Endwand des Klotzes (5') einmündet.

9. Lauffläche nach Anspruch 8, **dadurch gekennzeichnet, daß** jeder Gummiklotz (5"), der von einem anderen Gummiklotz (5') umgeben ist, auf seiner Seitenfläche mit mindestens einer Verbindungsbrücke (8") versehen ist, die die genannten Klötze (5', 5") untereinander verbindet, wobei die Schnittfläche der genannten Klötze mit der Seitenwand des durch den anderen Klotz umgebenen Klotzes durch zwei geometrische Hauptlinien begrenzt ist, die im wesentlichen zueinander parallel sind, und wobei die Tangenten an die genannten Linien einen im wesentlichen konstanten und von Null unterschiedlichen Winkel zur Achse XX' über mindestens einen großen Teil des Gummiklotzes (5") bilden.

10. Lauffläche nach Anspruch 9, **dadurch gekennzeichnet, daß** jedes Verbindungselement (8') eines ersten Gummiklotzes (5'), der einen zweiten Gummiklotz (5") umgibt, mindestens teilweise einen Wendel um den ersten Klotz herum bildet, der sich um die Achse XX' in einer ersten Richtung windet, während jedes Verbindungselement (8"), das den genannten zweiten Klotz (5"), der im Inneren des ersten Klotzes sitzt, mindestens teilweise um den zweiten Klotz einen Wendel bildet, der sich in einer Richtung windet, die zur ersten Richtung entgegengesetzt ist.

11. Lauffläche nach einem der Ansprüche 8 bis 10, **dadurch gekennzeichnet, daß** die auf die Abrolloberfläche der Lauffläche in neuem Zustand und in Richtung XX' projizierte Länge der geometrischen Hauptlinien der Schnittflächen aller Verbindungselemente (8', 8") ein und desselben Gummiklotzes (5', 5") gleich ist dem Umfang (L) der Kontur des genannten Gummiklotzes.

12. Reifen, der eine Lauffläche aufweist, wie sie gemäß irgendeines der Ansprüche 1 bis 11 definiert ist.

## Claims

1. A tyre tread (1), said tread being provided with a running surface (3, 3') and a plurality of incisions (4, 4', 4") opening onto said surface, each incision (4, 4', 4") being defined by the space bounded chiefly between two principal walls (6, 6') facing each other, said walls being perpendicular or oblique with respect to the running surface (3, 3'), the tread comprising at least one rubber stud (5, 5', 5") of mean axis XX' bounded by at least one incision, said stud comprising a side wall (6) encircling said stud around XX' and being bounded by an end wall (7) of the stud, visible from the outside of said tread, said side wall (6) being isolated from the tread except for at least one rubber connecting element (8, 8', 8"), each connecting element of each rubber stud having, with the side wall of said rubber stud, a surface of intersection (10, 12) bounded by two principal geometrical lines (11, 13), the tread being **characterised in that**:
- the projected length, on the running surface of the tread when new and in the direction XX', of the principal geometrical lines (11, 13) of the surfaces of intersection of all the connecting elements of one and the same rubber stud (5, 5', 5"), is greater than 90% of the perimeter of the contour of each rubber stud, measured on the same surface;
- the sum of the lengths of the intersections (L1, L2, L3) with any surface substantially parallel to the running surface of the tread when new and located to the inside of said tread, of the surfaces of intersection of all the connecting elements of one and the same rubber stud, represents at most 50% of the contour perimeter of said rubber stud, measured on the same surface.

2. A tread (1) according to claim 1, **characterised in that** the projected length, onto the running surface of the tread when new and in the direction XX', of the principal geometrical lines (11, 13) of the surfaces of intersection of all the connecting elements of one and the same rubber stud (5, 5', 5") is equal to the contour perimeter (L) of each rubber stud measured on the same surface.

3. A tread (1) according to claim 1 or claim 2, **characterised in that** at least one of the rubber studs (5, 5', 5") comprising at least one connecting element (8) is of generally cylindrical shape with mean axis XX'.

4. A tread (1) according to claim 3, **characterised in that** the variations in width of the surface of intersection (10, 12) of each connecting element (8) of a rubber stud do not vary by more than 50% of the mean width of said connecting element over the entire extent of said element, said width being equal to the length of the curve obtained by the intersection of said surface of intersection with a surface parallel to the running surface of the tread when new.

5. A tread (1) according to claim 4, **characterised in that** at least one rubber stud (5, 5', 5") is provided with at least one connecting element (8) whose surface of intersection (10, 12) with the side wall of said stud is bounded by two principal geometrical lines (11, 13), each of said geometrical lines making, at least in part, an angle α substantially constant and different from 0° with the direction XX'.

6. A tread (1) according to claim 5, **characterised in that** at least one rubber stud (5, 5', 5") is provided with at least two connecting elements (8) whose surfaces of intersection with the side wall of said stud are bounded by principal geometrical lines (13) parallel or virtually parallel to each other.

7. A tread (1) according to one of claims 1 to 6, **characterised in that** the projected length, onto the running surface of the tread when new and in the direction XX', of the principal geometrical lines (11, 13) of the surfaces of intersection of all the connecting elements of one and the same rubber stud (5, 5', 5") is equal to the contour perimeter (L) of said rubber stud.

8. A tyre tread according to one of claims 1 to 7, **characterised in that** at least one stud (5') encircles at least one other rubber stud (5") bounded by an incision (4"), said incision (4") opening upon the end wall of the stud (5').

9. A tread according to claim 8, **characterised in that** each rubber stud (5") encircled by another rubber stud (5') is provided on its lateral surface with at least one connecting bridge element (8") joining said studs (5',5") to each other, the surface of intersection of said studs with the side wall of the stud encircled by another stud being bounded by two principal geometrical lines substantially parallel to each other, the tangents to said lines making a substantially constant angle, different from zero, with the axis XX', at least over a large portion of the rubber stud (5").

10. A tread according to claim 9, **characterised in that** each connecting element (8') of a first rubber stud (5') encircling a second rubber stud (5") forms, at least partially around said first stud, a helix coiling around the axis XX' in a first direction, while each connecting element (8") joining the second stud (5") located inside the first stud forms, at least partially around said second stud, a helix winding in a direction opposed to said first direction.

11. A tread according to one of claims 8 to 10, **characterised in that** the projected length, onto the running surface of the tread when new and in the direction XX', of the principal geometrical lines of the surfaces of intersection of all the connecting elements (8', 8") of one and the same rubber stud (5', 5") is equal to the contour perimeter (L) of said rubber stud.

12. A tyre comprising a tread as defined according to one of claims 1 to 11.
